# EUROPÄISCHE PATENTSCHRIFT

(11) **EP 1 905 549 B1**
(45) Veröffentlichungstag und Bekanntmachung des Hinweises auf die Patenterteilung: **14.03.2012**
(21) Anmeldenummer: 07018764.6
(22) Anmeldetag: 25.09.2007
(51) Int. Cl.: B25J 15/02

(54) **Greifvorrichtung mit räumlichem Schraubgetriebe**
Gripper device with spatial skew type gears
Dispositif de prise doté d'un engrenage hélicoïdal spacial

(30) Priorität: 26.09.2006 DE 102006045783
(43) Veröffentlichungstag der Anmeldung: 02.04.2008
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- DE-A1- 3 419 187
- JP-A- 6 039 773
- JP-A- 51 124 787
- US-A1- 2005 274 215

## Beschreibung

Die Erfindung betrifft eine Greifvorrichtung mit mindestens zwei in einem Gehäuse geführten Schlitten, wobei jeder Schlitten ein Greifelement trägt und eine Verzahnung aufweist, die mit einem im Gehäuse gelagerten Synchronzahnrad kämmt, das über mindestens ein Getriebe mit einem lage- und/oder kraftgeregelten Elektromotor in Wirkverbindung steht.

Aus der DE 100 48 673 B4 ist eine derartige Greifvorrichtung bekannt.

Des Weiteren ist aus der JP 51124787 A eine Greifvorrichtung bekannt, deren Synchronrad über ein ebenes Stirnradgetriebe angetrieben wird. Die Antriebswelle dieses Stirnradgetriebes sitzt zusammen mit einem Schneckenrad auf einer Welle. Das Schneckenrad kämmt mit einer elektromotorisch angetriebenen Schneckenwelle.

Ferner ist aus dem Katalog "Sommer Automatic" der Sommer-automatic GmbH & Co. KG, Seite 87, aus dem Jahr 2003 ebenfalls eine solche Greifvorrichtung bekannt. Anstelle des Elektromotors werden jedoch die beiden Schlitten jeweils einzeln mittels pneumatischer Zylinder-Kolben-Einheiten angetrieben. Eine Lageregelung ist hier nicht möglich.

Des Weiteren ist aus der DE 40 05 334 C2 eine Greifvorrichtung bekannt, bei der eine elektromotorisch angetriebene Schnecke zwei einander gegenüberliegende Schneckenräder antreibt. Jedes Schneckenrad greift über ein auf seiner Welle sitzendes Stirnrad in eine Zahnstange ein.

Der vorliegenden Erfindung liegt die Problemstellung zugrunde, eine Greifvorrichtung mit geringer Masse zu entwickeln, bei der, bei einfacher Montage, die die Greifelemente tragenden Schlitten stabil geregelt, sicher und energiesparend bewegt werden.

Diese Problemstellung wird mit den Merkmalen des Hauptanspruches gelöst. Dazu ist das räumliche Schraubgetriebe ein ein schrägverzahntes, unechtes Schneckenrad aufweisendes Schneckengetriebe, wobei das Schneckenrad mit dem Synchronzahnrad auf einer gemeinsamen Welle angeordnet ist.

Mit dieser Greifvorrichtung kann man weg- und/oder kraftgeregelt Werkstücke handhaben, also ergreifen, halten und freigeben. Da bei dieser Vorrichtung die letzte Getriebestufe vor dem Antrieb der Schlitten ein selbsthemmendes Schneckengetriebe ist, wird die Greifkraft gehalten ohne dass permanente, den Antrieb überhitzende Regelausschläge notwendig sind.

Das Schneckengetriebe ist durch die Verwendung eines schrägverzahnten, stirnradartigen Schneckenrades eine Vorstufe zu einem Schraubradgetriebe.

Weitere Einzelheiten der Erfindung ergeben sich aus den Unteransprüchen und der nachfolgenden Beschreibung einer schematisch dargestellten Ausführungsform.
- Figur 1:: Dimetrische Darstellung einer elektrisch ange- triebenen Greifvorrichtung mit einem hier aus Darstellungsgründen transparentem Gehäuse;
- Figur 2:: Vertikalschnitt zu Figur 1 auf der Höhe einer Schneckenwelle;
- Figur 3:: Horizontalschnitt zu Figur 1 auf der Höhe einer Schneckenwelle;
- Figur 4:: Querschnitt zu Figur 1 auf der Höhe einer vertikalen Zentralwelle.

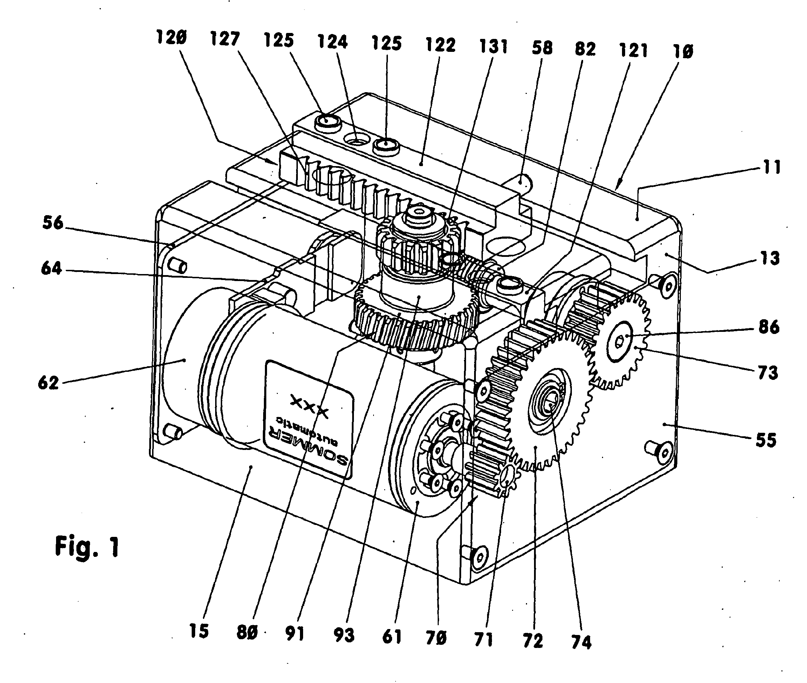

Die Figur 1 zeigt einen elektromotorisch angetriebenen Parallelgreifer mit zwei für das Aufnehmen von - hier nicht dargestellten - Greifelementen ausgestatteten Schlitten (121, 122). Die Schlitten (121, 122) und der Antrieb, also Motor (61), Tachogenerator (62) und Getriebe (70, 80), sind in einem Gehäuse (10) gelagert.

Das Gehäuse (10) ist ein quaderförmiger, beispielsweise aus einer Aluminiumlegierung hergestellter Körper. Die Abmessungen des Gehäuses (10) betragen beim Ausführungsbeispiel, in Millimetern: 110 x 90 x 72. Das Gehäuse (10) weist an seiner Oberseite (11) zwei t-nutenförmige Führungsnuten (51, 52) auf. Diese Führungsnuten (51, 52) verlaufen parallel zu den längeren Körperkanten des Gehäuses (10). Die Führungsflächen der Führungsnuten (51, 52) sind hardcoatiert, d.h. das Gehäuse (10) wird zumindest im Bereich der Führungsnuten (51, 52) z.B. galvanisch mit einer keramikähnlichen Aluminiumoxidschicht überzogen.

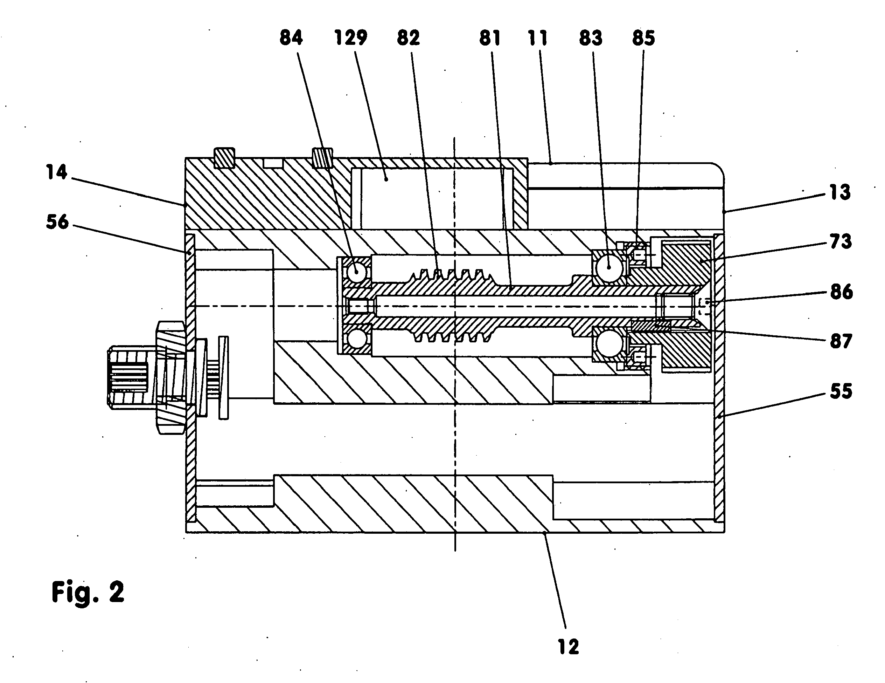

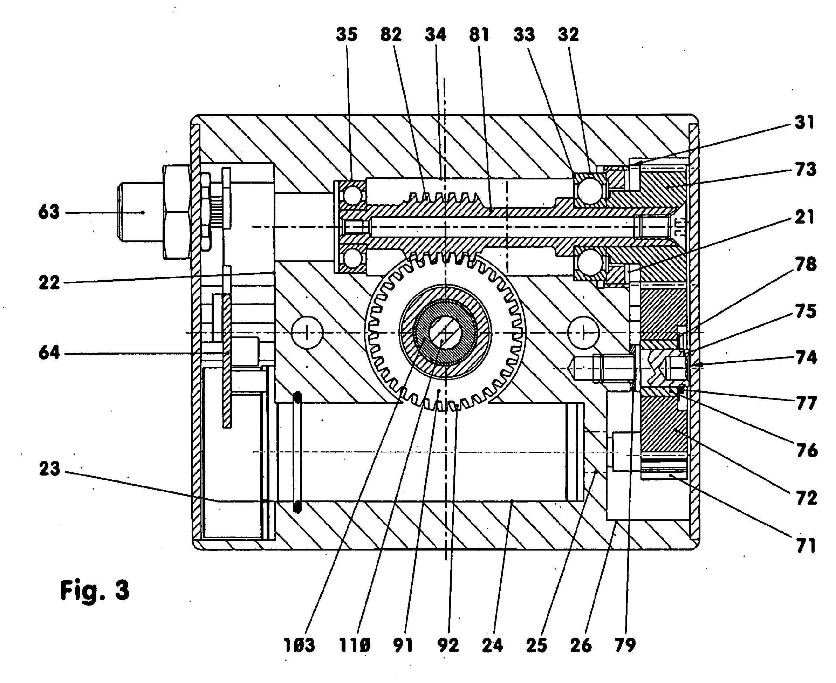

An den Stirnseiten des einteiligen Gehäuses (10) befinden sich größere Einfräsungen (21, 22), vgl. auch Figuren 2 und 3, die jeweils durch einen separaten Deckel (55, 56) verschließbar sind. Die beiden z.B. gleichgroßen Deckel (55, 56) sind jeweils über vier Senkschrauben am Gehäuse (10) - bündig mit der Gehäusekontur - befestigt, vgl. Figur 1.

Die vordere (21) und hintere Einfräsung (22) sind durch beispielsweise vier durchgehende Bohrungen (23, 31, 37, 38) miteinander verbunden. Die Mittellinien dieser Bohrungen (23, 31, 37, 38) verlaufen parallel zu den längeren Körperkanten des Gehäuses (10).

Die erste Bohrung ist eine Stufenbohrung (23) zur Aufnahme des Motors (61). Sie hat drei Abschnitte (24-26). Der erste Abschnitt (24) ist eine von der Rückseite (14) aus gefertigte Bohrung, deren Durchmesser nur geringfügig größer ist als der maximale Außendurchmesser des Motors (61). Der dritte Abschnitt (26) ist von der Vorderseite aus in des Gehäuse (10) gefräst. In diesem Abschnitt befindet sich das motorseitige Antriebsritzel (71). Die Abschnitte (24) und (26) sind durch den zweiten Abschnitt (25) miteinander verbunden. Der Durchmesser dieses Abschnittes (25) ist erheblich kleiner als der der beiden anderen Abschnitte (24, 26). Er ist gerade so groß, dass das motorseitige Antriebsritzel (71) hindurchgesteckt werden kann. Um den Bohrungsabschnitt (25) herum befinden sich z.B. sechs Senkkopfbohrungen, über die der Motor (61) stirnseitig im Gehäuse (10) befestigt wird.

Die zweite Bohrung (31) ist ebenfalls eine Stufenbohrung. In ihr ist eine Schneckenwelle (81) mit angeformter Schnecke (82) und montiertem Abtriebsrad (73) gelagert. Diese Stufenbohrung (31) wird vollständig von der Vorderseite (13) aus gebohrt. Der erste Abschnitt (32) dient der Aufnahme des Festlagers (83) der Schneckenwelle (81). Im zweiten Abschnitt (34) befindet sich die Schnecke (82). In einem dritten Abschnitt (35) sitzt das Loslager (84) der Schneckenwelle (81). Die beiden Lager (83, 84) sind beispielsweise Rillenkugellager. Zur axialen Arretierung des Festlagers (83) wird eine Gehäusemutter (85) mit Außengewinde benutzt.

Die dritte Bohrung (37) ist eine glatte Durchgangsbohrung, die ausschließlich der Gewichtsreduktion dient. Sie befindet sich im Bereich unterhalb der Stufenbohrung (31). Eine vergleichbare Bohrung ist eine vierte, ebenfalls glatte Durchgangsbohrung (38). Sie liegt oberhalb der Stufenbohrung (23).

Das Gehäuse (10) wird beispielsweise zentral von einer fünften Bohrung (41) durchquert. Letztere verbindet sie Unterseite (12) mit der Oberseite (11) des Gehäuses (10). Diese Stufenbohrung (41) wird von der Unterseite (12) aus gebohrt. Ihr mittlerer Abschnitt (43) dient der Unterbringung eines Schneckenrades (91). Dazu kreuzt diese Bohrung (41) zwangsweise die Bohrung (31), in der die Schneckenwelle (81) gelagert ist. Sie kreuzt auch die Bohrung (23).

Der vordere Abschnitt (42) der Bohrung (41) ist ein Gewinde zur Fixierung eines Lagerzapfens (110), der u.a. das Schneckenrad (91) lagert. Der restliche Bereich der Bohrung (41) weist einen an den mittleren Abschnitt (43) anschließenden hinteren Abschnitt (44) kleineren Durchmessers auf. Dieser Abschnitt (44) umgibt ein sogenanntes Synchronzahnrad (131). An den hinteren Abschnitt (44) schließt sich eine zur Oberseite (11) führende Stützbohrung (45) an, in der das Ende des Lagerzapfens (110) mit geringen Spiel oder zumindest einem Klemmsitz abgestützt ist.

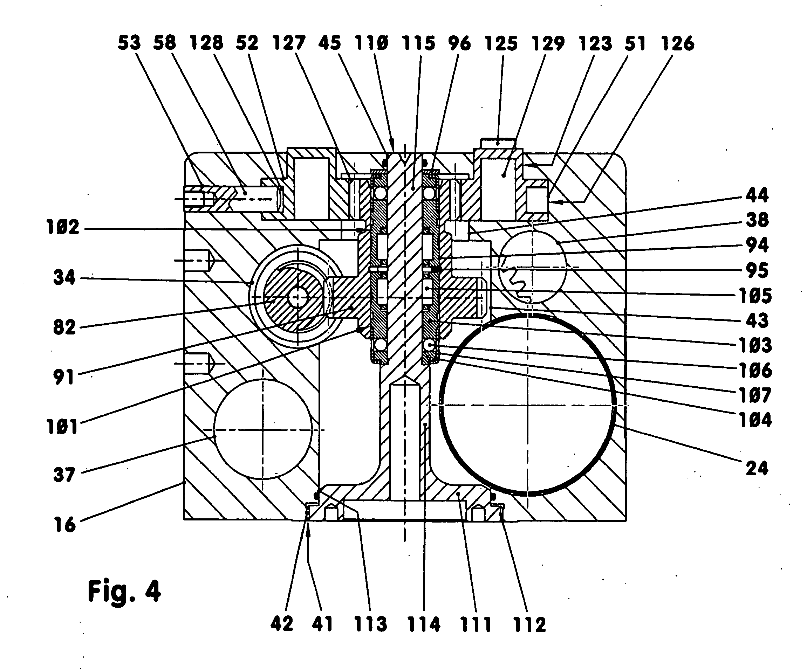

Auf der linken Seite (15) des Gehäuses (10) befindet sich auf der Höhe der Führungsnuten (51, 52) eine Bohrung (53), zur Aufnahme eines z.B. zylindrischen Schlittenanschlags (58), vgl. Figur 1 und 4.

Nach Figur 1 steckt der Motor (61) in der Stufenbohrung (23). Er ist dabei mit seiner vorderen Stirnseite am zweiten Abschnitt (25) der Stufenbohrung (23) befestigt. Der Motor (61) trägt vorn auf seiner - in die Einfräsung (21) hineinragende - Motorwelle das geradverzahnte Antriebsritzel (71) mit zehn Zähnen. An der Rückseite des Motors (61) ist ein Tachogenerator (62) angeordnet. Der Tachogenerator (62) liefert Signale für eine Lageregelung der Greifvorrichtung Das Antriebsritzel (71) kämmt mit einem Zwischenrad (72). Letzteres hat beispielsweise 36 Zähne und sitzt gleitgelagert auf einem Einschraubbolzen (74). Der Einschraubbolzen (74) hat einen Kopf (75) mit einem Innensechskant und einem z.B. aufgeschrumpften Gleitlagerring (76). Im Bereich des Innensechskants befindet sich auf der zylindrischen Außenkontur des Kopfes (75) ein Einstich für die Aufnahme eines Sicherungsringes (77). Der Einschraubbolzen (74) ist im Gehäuse (10) innerhalb der Einfräsung (21) eingeschraubt. Ggf. stützt sich der Kopf (74) über einen Distanzring (79) am Gehäuse (10) ab. Zwischen dem montierten Sicherungsring (77) und dem Zwischenrad (72) ist für die axiale Fixierung von (72) eine Axialscheibe (78) angeordnet. Alle drei Räder (71-73) liegen in einer Ebene.

In der zweiten Stufenbohrung (31) ist die Schneckenwelle (81) gelagert, vgl. Figur 2. Die Schneckenwelle (81) ist eine Hohlwelle mit einer angeformten Schnecke (82). Auf dem hinteren Ende der Schneckenwelle (81) ist das Loslager (84) gegen einen Wellenbund aufgeschoben. Auch das vordere Wellenende hat einen Wellenbund an dem jedoch ein Festlager (83) anliegt. Neben dem Festlager (83) sitzt des Abtriebsrad (73). Letzteres wird zusammen mit dem Festlager (83) mittels einer in einem in der Bohrung der Schneckenwelle (81) vorhandenen Innengewinde eingeschraubten Senkschraube (86) gegen den entsprechenden Wellenbund geklemmt. Im vorderen Bereich des Wellenendes weist die Schneckenwelle (81) eine Nut auf, in der eine Passfeder (87) zur formschlüssigen Verbindung mit dem Abtriebsrad (73) angeordnet ist.

Zur axialen Fixierung der Schneckenwelle (81) wird der Außenring des Festlagers (83) mittels der Gehäusemutter (85) gegen einen Gehäusebund (33) verspannt.

Die beispielsweise eingängige, zylindrische Schnecke (82) kämmt mit dem zentral in Gehäuse (10) angeordneten, beispielsweise 35-zahnigen Schneckenrad (91), vgl. Figur 3. Beide haben sich senkrecht kreuzende Mittellinien. Das Schneckenrad (91) hat eine reine Schrägverzahnung (92), dessen Schrägungswinkel dem Mittensteigungswinkel der Zylinderschnecke (82) entspricht. Wegen der reinen Schrägverzahnung (92) wird das Scheckenrad (91) als unechtes Schneckenrad bezeichnet. Die Zahnflanken der Radpaarung haben im Gegensatz zu regulären Schneckenradsätzen nur eine Punktberührung. Die vorhandene Längsgleitbewegung der Zahnflanken erfordert hier verschleißfeste Werkstoffe oder gehärtete Zahnräder. Im Ausführungsbeispiel sind daher die Schnecke (82) und das Schneckenrad (91) jeweils aus einem Nitrierstahl 34CrAlNi7-10 gefertigt und entsprechend oberflächengehärtet.

Das unechte Schneckenrad (91) hat u.a. den Vorteil, dass bei seinem Einbau in das Gehäuse (10) die Mittellinie der Schnecke (82) nicht in der Mittelebene der Verzahnung (92) liegen muss. Die Höhenlage kann gegenüber der Schnecke (82) im Millimeterbereich abweichen.

Nach Figur 4 ist das Schneckenrad (91) und das Synchronzahnrad (131) auf einer gemeinsamen, hohlen Zentralwelle (93) angeordnet. Beispielsweise sind die Welle (93) und die beiden Zahnräder (91, 131) aus einem Teil gefertigt. Die Zentralwelle (93) sitzt wälzgelagert auf dem in Gehäuse (10) befestigten Lagerzapfen (110). Der Lagerzapfen (110) besteht aus drei Abschnitten, einem Flanschabschnitt (111), einen Verbindungsabschnitt (114) und einen Lagerabschnitt (115). Der Flanschabschnitt (111) hat eine Zentrierzone (113) und ein Außengewinde (112). Die Zentrierzone (113) sitzt abgedichtet im mittleren Abschnitt (43) der Stufenbohrung (41), während das Außengewinde (112) in vorderen Abschnitt (42) der Stufenbohrung (41) eingeschraubt ist. Der Flanschabschnitt (111) geht unter einer Durchmesserverringerung von ca. 70% in den Verbindungsabschnitt (114) über. Der Flanschabschnitt (111) und der Verbindungsabschnitt (114) sind zur Gewichtseinsparung jeweils aufgebohrt.

An den Verbindungsabschnitt (114) schließt sich der Lagerabschnitt (115) an. Sein Durchmesser, der über den gesamten Lagerabschnitt (115) konstant bleibt, ist etwas kleiner als der des Verbindungsabschnitts (114). Auf dem Lagerabschnitt (115) sind zwei, beispielsweise identische, kombinierte Radial-Axiallager (101, 102) gelagert. Beide Lager (101, 102) lagern die Zentralwelle (93).

Jedes Radial-Axiallager (101, 102) hat u.a. einen Außenring (103) und eine Axialscheibe (104). Der Außenring (103) umgreift ein radial wirkendes Nadellager (105). Letzteres rollt direkt auf dem Lagerabschnitt (115) des Lagerzapfens (110) ab. Zwischen dem Außenring (103) und der Axialscheibe (104) sind z.B. Kugeln (106) angeordnet, die axiale Kräfte abstützen. Die Kugeln (106) und die Axialscheibe (104) werden lose von einem am Außenring (103) befestigten Korb (107) gehalten.

Das untere Radial-Axiallager (101) sitzt mit der Axialscheibe (104) auf dem zwischen dem Lagerabschnitt (115) und dem Verbindungsabschnitt (114) gelegenen Wellenbund auf. Das oberhalb liegende Nadellager (105) sitzt im Bereich des Schneckenrades (91). Oberhalb des unteren Lagers (101) ist ein sich in einer Nut der Bohrung (94) abstützender Sicherungsring (95). Oberhalb des Sicherungsrings (95) befindet sich das zweite Lager (102). Seine Axialscheibe (104) liegt an einer am Gehäuse (10) abgestützten Gleitscheibe (96) an.

In den Führungsnuten (51, 52) des Gehäuses (10) sind zwei Schlitten (121, 122) geführt. Beide Schlitten (121, 122) bestehen aus einem unteren Antriebsabschnitt (126) und einem oberen Führungsabschnitt (123). Der breitere, untere Antriebsabschnitt (126) hat jeweils seitlich ein Zahnstangenprofil (127), das mit dem Synchronzahnrad (131) kämmt. Auf der dem Zahnstangenprofil (127) abgewandten Seite hat der Antriebsabschnitt (126) eine Anschlagnut (128), die jeweils kurz vor dem Schlittenende, einen Anschlag bildend, endet.

Der Führungsabschnitt (123) steht bei beiden Schlitten (121, 122) ca. 1 Millimeter über die Gehäuseoberseite (11) über. An der Schlittenoberseite, vgl. Figur 1, trägt jeder Schlitten (51, 52) beispielsweise an dem den jeweiligen Stirnseiten (13, 14) zugewandten Enden zwei Zentrierhülsen (125) und eine Befestigungsbohrung (124). Die Befestigungsbohrung (124) hat unterhalb einer Zylindersenkung ein Innengewinde. Auf den Zentrierhülsen (125) werden - hier nicht dargestellte - Greifelemente aufgesetzt und mittels jeweils einer Schraube in der entsprechenden Befestigungsbohrung (124) verankert. Selbstverständlich können die Greifelemente auch an die jeweiligen Schlitten (51, 52) angeformt sein.

In dem Schlittenbereich, in dem nicht die Zentrierhülsen (125) befestigt sind, ist im einzelnen Schlitten (51, 52), von dessen Unterseite aus, jeweils eine gewichtsreduzierende Nut (129) eingefräst.

Nach der Montage des Motors (61, 62), der Getriebe (70, 80) und der Schlitten (121, 122) werden die Verzahnungen mit Fett geschmiert und abschließend die Deckel (55, 56) auf der Vorder- (13) und Rückseite (14) des Gehäuses (10) abdichtend befestigt. Der Deckel (56) der Rückseite (14) trägt zusätzlich einen Stecker (63) zur Ansteuerung der Greifvorrichtung.

### Bezugszeichenliste:

- 10: Gehäuse
- 11: Oberseite
- 12: Unterseite
- 13: Vorderseite, Stirnseite
- 14: Rückseite, Stirnseite
- 15: linke Seite
- 16: rechte Seite

- 21: Einfräsung, vorn
- 22: Einfräsung, hinten
- 23: Bohrung, Stufenbohrung für Motor
- 24: erster Abschnitt
- 25: zweiter Abschnitt
- 26: dritter Abschnitt

- 31: Bohrung, Stufenbohrung für Schneckenradwelle
- 32: erster Abschnitt
- 33: Gehäusebund
- 34: zweiter Abschnitt
- 35: dritter Abschnitt

- 37: Bohrung, glatt
- 38: Bohrung, glatt

- 41: Stufenbohrung für Lagerzapfen
- 42: vorderer Abschnitt
- 43: mittlerer Abschnitt
- 44: hinterer Abschnitt
- 45: Stützbohrung

- 51, 52: Führungsnuten
- 53: Bohrung für Schlittenanschläge
- 55, 56: Deckel, vorn, hinten
- 58: Schlittenanschlag

- 61: Motor, Elektromotor
- 62: Tachogenerator
- 63: Stecker
- 64: Platine

- 70: Stirnradgetriebe, Rädergetriebe
- 71: Antriebsritzel, geradverzahnt, Stirnrad
- 72: Zwischenrad, geradverzahnt, Stirnrad
- 73: Abtriebsrad, geradverzahnt, Stirnrad
- 74: Einschraubbolzen
- 75: Kopf
- 76: Gleitlagerring
- 77: Sicherungsring
- 78: Axialscheibe
- 79: Distanzring

- 80: Schneckenradgetriebe, Schraubgetriebe
- 81: Schneckenwelle
- 82: Schnecke, Zylinderschnecke
- 83: Festlager
- 84: Loslager
- 85: Gehäusemutter
- 86: Senkschraube
- 87: Passfeder

- 91: Schneckenrad, unecht, schrägverzahnt
- 92: Schrägverzahnung
- 93: Zentralwelle, Welle, Hohlwelle
- 94: Bohrung
- 95: Sicherungsring
- 96: Gleitscheibe

- 101, 102: Radial-Axiallager, unten, oben
- 103: Außenring
- 104: Axialscheibe
- 105: Nadellager
- 106: Kugeln
- 107: Korb

- 110: Lagerzapfen
- 111: Flanschabschnitt
- 112: Außengewinde
- 113: Zentrierzone
- 114: Verbindungsabschnitt
- 115: Lagerabschnitt

- 120: Lineargetriebe
- 121, 122: Schlitten
- 123: Führungsabschnitt
- 124: Befestigungsbohrung
- 125: Zentrierhülsen

- 126: Antriebsabschnitt
- 127: Zahnstangenprofil, Verzahnung
- 128: Anschlagnut für Anschlagzapfen
- 129: Nut

- 131: Synchronzahnrad, geradverzahnt

## Patentansprüche

1. Greifvorrichtung mit mindestens zwei in einem Gehäuse (10) geführten Schlitten (121, 122), wobei jeder Schlitten (121, 122) ein Greifelement trägt und eine Verzahnung (127) aufweist, die mit einem im Gehäuse (10) gelagerten Synchronzahnrad (131) kämmt, das über mindestens ein Getriebe mit einem lage- und/oder kraftgeregelten Elektromotor (61) in Wirkverbindung steht, wobei das Synchronzahnrad (131) über ein räumliches Schraubgetriebe (80) und mindestens ein ebenes Räder- oder Zugmittelgetriebe (70) angetrieben wird, **dadurch gekennzeichnet,**
**dass** das räumliche Schraubgetriebe (80) ein ein schrägverzahntes, unechtes Schneckenrad (91) aufweisendes Schneckengetriebe ist, wobei das Schneckenrad (91) mit dem Synchronzahnrad (131) auf einer gemeinsamen Welle.(93) angeordnet ist.

2. Greifvorrichtung gemäß Anspruch 1, **dadurch gekennzeichnet, dass** der Werkstoff einer Schnecke (82) und des Schneckenrades (91) jeweils eine Stahllegierung ist.

3. Greifvorrichtung gemäß Anspruch 1, **dadurch gekennzeichnet, dass** das Rädergetriebe (70) aus drei geradverzahnten Stirnrädern (71-73) besteht.

4. Greifvorrichtung gemäß Anspruch 1, **dadurch gekennzeichnet, dass** die Welle (93) eine Hohlwelle ist, die auf einem gehäusefesten Lagerzapfen (110) gelagert ist.

5. Greifvorrichtung gemäß Anspruch 1, **dadurch gekennzeichnet, dass** im Gehäuse (10) zwei Schlitten (121, 122) in T-nutenartigen Führungsnuten (51, 52) gelagert sind, wobei die Führungsnuten (51, 52) parallel zueinander angeordnet sind.

6. Greifvorrichtung gemäß Anspruch 5, **dadurch gekennzeichnet, dass** beide Schlitten (121, 122) baugleich sind.

## Claims

1. Gripper assembly comprising at least two slide members (121, 122) guided for movement in a housing (10), each said slide member (121, 122) supporting a gripper element and being toothed to mesh with a synchronizing gear (131) mounted in housing (10) and coupled for operative interaction with a position- and/or force-controlled electric motor (61) through at least one transmission, said synchronizing gear (131) driven via a spatial screw-type transmission (80) and at least one planar gear- or traction-type transmission (70), **characterized in that**
- said spatial screw-type transmission (80) is a worm-type transmission having an angle-cut false worm gear (91), said worm gear (91) mounted on a common shaft (93) with synchronizing gear (131).

2. Gripper assembly as claimed in claim 1, **characterized in that** the material of a worm (82) and of worm gear (91) is a steel alloy.

3. Gripper assembly as claimed in claim 1, **characterized in that** gear transmission (70) consists of three straight-cut gears (71-73).

4. Gripper assembly as claimed in claim 1, **characterized in that** shaft (93) is a hollow shaft mounted on a journal (110) fixedly connected to said housing.

5. Gripper assembly as claimed in claim 1, **characterized in that** housing (10) has therein two slide members (121, 122) mounted in guide grooves (51, 52) substantially T-shaped in section, said guide grooves (51, 52) arranged to extend in parallel with each other.

6. Gripper assembly as claimed in claim 5, **characterized in that** both slide members (121, 122) are similar in construction.

## Revendications

1. Dispositif de préhension équipé d'au moins deux coulisseaux (121, 122) guidés dans un carter (10), chaque coulisseau (121, 122) portant un élément de préhension et présentant une denture (127) qui s'engrène avec une roue dentée synchrone (131) qui est en liaison fonctionnelle, par l'intermédiaire d'au moins une transmission, avec un moteur électrique (61) réglable en position et/ou en force, la roue dentée synchrone (131) étant entraînée par un engrenage hélicoïdal spatial (80) et par au moins un train d'engrenage plat ou par une transmission à moyen de traction (70), **caractérisé en ce**
- **que** l'engrenage hélicoïdal spatial (80) est un engrenage à vis sans fin avec une fausse roue hélicoïdale (91), la roue hélicoïdale (91) et la roue dentée synchrone (131) étant placées sur un arbre commun (93).

2. Dispositif de préhension selon la revendication 1, **caractérisé en ce que** le matériau utilisé pour une vis sans fin (82) et pour la roue hélicoïdale (91) est un alliage d'acier.

3. Dispositif de préhension selon la revendication 1, **caractérisé en ce que** le train d'engrenages (70) est composé de trois roues droites à denture droite (71-73).

4. Dispositif de préhension selon la revendication 1, **caractérisé en ce que** l'arbre (93) est un arbre creux qui est logé sur un tourillon fixé (110) dans le carter.

5. Dispositif de préhension selon la revendication 1, **caractérisé en ce que** deux chariots (121, 122) sont placés dans le carter (10) dans des rainures de guidage en forme de T (51, 52), les rainures de guidage (51, 52) étant disposées parallèlement.

6. Dispositif de préhension selon la revendication 5, **caractérisé en ce que** les deux chariots (121, 122) sont de type identique.
